# EUROPÄISCHE PATENTSCHRIFT

(11) **EP 3 590 180 B1**
(45) Veröffentlichungstag und Bekanntmachung des Hinweises auf die Patenterteilung: **29.09.2021**
(21) Anmeldenummer: 18717204.4
(22) Anmeldetag: 18.02.2018
(51) Int. Cl.: H02K 15/12, H05B 6/02, H05B 6/10, H05B 6/06

(54) **VERFAHREN ZUR TRÄUFELIMPRÄGNIERUNG DES STATORS ODER ANKERS EINER ELEKTROMASCHINE**
METHOD FOR TRICKLE IMPREGNATION OF THE STATOR OR ARMATURE OF AN ELECTRIC MACHINE
PROCÉDÉ D'IMPRÉGNATION GOUTTE À GOUTTE DU STATOR OU DE L'INDUIT D'UN MOTEUR ÉLECTRIQUE

(30) Priorität: 28.02.2017 DE 102017001940
(43) Veröffentlichungstag der Anmeldung: 08.01.2020
(73) Patentinhaber: Gehring Technologies GmbH + Co. KG, 73760 Ostfildern (DE)
(72) Erfinder: BERTHOLD, Jens, 06467 Hoym (DE); SCHNEIDER, Stefan, 06268 Langeneichstädt (DE); RASP, Richard A., 61250 Usingen (DE)
(74) Vertreter: DREISS Patentanwälte PartG mbB
(86) Internationale Anmeldenummer: PCT/DE2018/000033
(87) Internationale Veröffentlichungsnummer: WO 2018/157876

(56) Entgegenhaltungen:
- EP-A1- 0 817 358
- CA-A- 803 967
- DE-A1- 1 538 918
- DE-T5-112014 002 790
- JP-A- 2005 086 954
- JP-A- 2010 262 828

## Beschreibung

Die Erfindung betrifft ein Verfahren zur Träufelimprägnierung des Stators oder Ankers einer Elektromaschine mit einem unter Temperaturerhöhung aushärtenden Kunstharz.

Es ist allgemein bekannt, dass bei der Herstellung einer Elektromaschine, sei es nun ein Elektromotor oder ein Generator, eine Verfestigung der Wicklungen des Stators und Ankers vorgenommen werden muss. Dies geschieht heute üblicherweise mittels eines sogenannten Träufelverfahrens und einer diesbezüglichen Imprägniervorrichtung. Der Stator oder der Anker wird dazu aufgeheizt und hinsichtlich seiner Längsachse schräg in der Imprägniervorrichtung eingespannt sowie um diese Längsachse gedreht. Der Stator oder Anker kann jedoch auch horizontal ausgerichtet sein. Anschließend wird vorzugsweise auf das höher angeordnete axiale Ende des Stators oder Ankers, etwa auf dessen Wicklungskopf, ein bei Raumtemperatur zunächst flüssiges Kunstharz aufgeträufelt. Das Kunstharz kann aus einer oder mehreren Komponenten bestehen, beispielsweise aus einem Basis-Kunstharz und einem Härter.

Der Volumenstrom, mit dem das noch flüssige Kunstharz auf den Stator oder Anker aufgebracht wird, ist abgestimmt auf die jeweilige Aufnahmefähigkeit desselben. Nach dem Aufträufeln gelangt das Kunstharz in die Zwischenräume zwischen den Wicklungsdrähten sowie den Blechpaketen und füllt diese Zwischenräume vollständig aus. Bei einem anschließenden Erwärmen des Stators oder Ankers auf eine Aushärtetemperatur des Kunstharzes verfestigt sich dieses und wird zu einem Duroplast, welcher nach diesem Aushärten durch eine neuerliche Erwärmung nicht mehr verformbar ist. Hierdurch sind die mit dem Kunstharz in Kontakt gekommenen Bauteile des Stators oder Ankers fest miteinander verbunden. Das Duroplast erfüllt alle mechanischen und elektrischen Anforderungen, die an eine stillstehende oder rotierende Elektromaschine gestellt werden.

Um ein optimales Eindringen des zunächst flüssigen Kunstharzes in den Stator oder Anker zu gewährleisten, wird zumindest der Stator oder Anker vor dem Beginn des Träufelvorgangs auf eine sogenannte Träufeltemperatur erhitzt sowie während des Träufelvorgangs auf dieser Temperatur gehalten. Die Träufeltemperatur kann abhängig von dem verwendeten Kunstharz beispielsweise zwischen 70°C und 90°C betragen. Nachdem eine vorbestimmte Menge des zunächst noch flüssigen Kunstharzes in den Stator oder Anker eingebracht wurde, wird dieser auf eine Aushärtetemperatur erhitzt, welche ebenfalls kunstharzabhängig beispielsweise zwischen 120°C und 160°C beträgt. Diese Aushärtetemperatur wird dann über einen vorbestimmten Zeitraum eingehalten, um so ein vollständiges Aushärten des Kunstharz-Härter-Gemischs zu ermöglichen. Abschließend wird der Stator oder Anker auf Raumtemperatur abgekühlt und für weitere Herstellvorgänge zur Erzeugung der Elektromaschine bereitgestellt.

Die Erwärmung des Stators oder Ankers auf die Träufeltemperatur und die Aushärtetemperatur kann in einem dafür geeigneten Ofen erfolgen. Aus der DE 1 212 204 A und der DE 19 19 642 A ist es aber bereits bekannt, die Erwärmung des Stators oder Ankers mittels eines elektrischen Heizstromes zu erreichen, der durch die Wicklungen des Stators oder Ankers geleitet wird. Da ein einfaches Hindurchleiten eines Heizstromes durch die Wicklungen zu große Abweichungen der erreichbaren Ist-Temperaturen von den angestrebten Soll-Temperaturen entstehen lässt, wurde vorgeschlagen, das Erreichen und Aufrechterhalten der gewünschten Temperaturen durch eine Regelung des Heizstromes zu gewährleisten. Hierbei wurde die Erkenntnis genutzt, dass in einer Wicklung der Ohm'sche Widerstand mit ansteigender Temperatur zunimmt, so dass über den Ohm'schen Widerstand auf die Temperatur der Wicklung geschlossen werden kann. In der DE 1 212 204 A wurde daher vorgeschlagen, dass dann, wenn der für das Vorliegen der Träufeltemperatur oder Aushärtetemperatur erforderliche elektrische Widerstandswert der Wicklung erreicht ist, der durch die Wicklung des Stators oder Ankers geleitete Heizstrom abgeschaltet wird. Der Heizstrom wird erst dann wieder eingeschaltet, wenn ein vorbestimmt geringerer Widerstandswert der Wicklung gemessen wird, welches gleichbedeutend mit dem Unterschreiten einer unteren Grenztemperatur ist.

JP 2010 262828 A, DE 15 38 918 A1 und JP 2005 086954 A zeigen Verfahren zur Träufelimprägnierung mit Merkmalen des Oberbegriffs des Anspruchs 1.

Nachteilig bei diesen bekannten Verfahren und den dazu benutzten Vorrichtungen zum Imprägnieren eines Stators oder Ankers einer Elektromaschine ist jedoch, dass die Temperaturregelung mittels eines durch die Wicklung geleiteten Heizstromes erfolgt, der technisch aufwendig in den sich drehenden Stator oder Anker einzuspeisen ist. Außerdem weisen die in den beiden Druckschriften vorgeschlagenen Verfahren und Vorrichtungen den Mangel auf, dass die Regelung des Heizstromes allein auf die Temperatur der von dem Heizstrom durchflossenen Wicklung abgestellt ist. Dies ist zumindest in denjenigen Zeiträumen unvorteilhaft, in denen die die Wicklungen umgebenden anderen Bauteile noch nicht die Temperatur der Wicklungen angenommen haben. Da das Kunstharz aber nicht nur zwischen benachbarte Drähte beziehungsweise Drahtabschnitte der Wicklungen sondern auch mit anderen Bauteilen des Stators beziehungsweise Ankers in Kontakt gelangt, ergibt sich für das dort vorhandene Kunstharz eine nicht genau bekannte Temperatur. Daher ist zumindest die Aufheizphase bis zum Erreichen der Träufeltemperatur aufgrund von Erfahrungswerten so zu verlängern, bis davon ausgegangen werden kann, dass die durch die elektrische Widerstandsmessung ermittelte Wicklungstemperatur auch bei allen anderen Bauteilen des Stators oder Ankers vorliegt. Erst dann kann mit dem Einträufeln des Kunstharzes in den Stator oder Anker mit der gewünschten Prozesssicherheit begonnen werden. Da diese Unsicherheit hinsichtlich der Temperaturen der Bauteile des Stators oder Ankers und des Kunstharzes auch zu Beginn des Aushärtevorgangs vorliegt, muss dieser ebenfalls nachteilig um einen Sicherheitszeitraum verlängert werden. Letztlich wird es als ungünstig beurteilt, dass die Erwärmung des Kunstharzes nur mittelbar durch den Wärmetransport zwischen den Wicklungen und demselben stattfindet. Dies führt dazu, dass das Erreichen der Träufeltemperatur und der Aushärtetemperatur vergleichsweise lange dauert.

Die geschilderten Zeiträume für die Imprägnierung eines Stators oder Ankers bedeuten im Ergebnis eine kostenintensive Verlängerung der Fertigungsdauer sowie eine Vergrößerung der Energiekosten zum Aufheizen sowie Konstanthalten der Träufel- und Aushärtungstemperatur.

Der Erfindung liegt daher die Aufgabe zugrunde, ein Verfahren vorzustellen, mit dem das Imprägnieren eines Stators oder eines Ankers einer Elektromaschine mit einem unter Wärmeeinwirkung aushärtenden Kunstharzes schneller, energiesparender und kostengünstiger als bisher erfolgen kann.

Die Lösung dieser Aufgabe wird mit einem Verfahren erreicht, welches die Merkmale des Anspruchs 1 aufweist. Vorteilhafte Weiterbildungen dieses Verfahrens sind in den abhängigen Ansprüchen definiert.

Die Erfindung betrifft demnach ein Verfahren zur Träufelimprägnierung des Stators oder Ankers einer Elektromaschine mit einem unter Temperaturerhöhung aushärtenden Kunstharz, welches folgende Schritte aufweist:
a) Erwärmen des Stators oder Ankers von einer Ausgangstemperatur auf einen Träufeltemperaturbereich des zunächst noch flüssigen Kunstharzes in einem ersten Zeitraum,
b) Konstanthalten der Temperatur im Träufeltemperaturbereich sowie Einbringen des noch flüssigen Kunstharzes in den Stator oder Anker in einem zweiten Zeitraum,
c) Erwärmen des Stators oder Ankers auf einen Aushärtetemperaturbereich in einem dritten Zeitraum,
d) Konstanthalten der Temperatur des Stators oder Ankers im Aushärtetemperaturbereich in einem vierten Zeitraum sowie Abbinden und Aushärten des Kunstharzes zu einem Duroplast, und
e) Abkühlen des Stators oder Ankers nach dem Ende des vierten Zeitraumes,
wobei der Stator oder Anker während des Einbringens des flüssigen Kunstharzes in einer Imprägniervorrichtung angeordnet ist, und bei dem der Träufeltemperaturbereich geringere Temperaturen aufweist als der Aushärtetemperaturbereich. Gemäß der Erfindung ist bei diesem Verfahren vorgesehen, dass die Erwärmung des Stators oder Ankers induktiv erfolgt.

Der Stator oder Anker ist während des Einbringens des flüssigen Kunstharzes vorzugsweise in einer Imprägniervorrichtung angeordnet, in welcher dieser hinsichtlich seiner Längsachse zur Horizontalen geneigt und um diese Längsachse gedreht werden kann. Durch die Neigung wird das Einfließen des Kunstharzes in den Stator oder Anker begünstigt. Eine Rotation des Stators oder Ankers kann die gleichmäßige Erwärmung desselben während der induktiven Erwärmung verbessern und eine unvorteilhafte Ansammlung von Kunstharz an der Unterseite des Stators oder Ankers verhindern.

Die Erfindung nutzt die Erkenntnis, dass sich ein Stator oder Anker für eine Elektromaschine sehr vorteilhaft mittels einer induktiven Erwärmung auf die Träufeltemperatur und die Aushärtungstemperatur bringen sowie auf diesen Temperaturen halten lässt. Von besonderer Bedeutung ist dabei, dass mit nur einem Induktor in allen elektrisch leitfähigen Bestandteilen eines solchen Stators oder Ankers gleichzeitig Wirbelströme erzeugt werden, welche diese Bauteile zeitgleich erwärmen. Hierdurch werden die Aufheizdauer sowie die notwendige elektrische Energie im Vergleich zu den bekannten Imprägnierverfahren deutlich reduziert. Im Ergebnis werden dadurch die Herstellkosten für die Imprägnierung reduziert.

Bei diesem Verfahren ist bevorzugt vorgesehen, dass die Erwärmung aller elektrisch leitenden Bauteile des Stators oder Ankers mittels elektrischer Wirbelströme erfolgt, welche durch ein hochfrequentes oder mittelfrequentes magnetisches Wechselfeld eines elektromagnetischen Induktors erzeugt werden. Der Induktor umgreift dazu den Stator oder Anker radial außen ringförmig oder hohlzylindrisch. Es ist aber auch möglich, dass der Induktor in einem zentrischen, koaxialen Hohlraum des Stators angeordnet ist.

Die elektrischen Wirbelströme erwärmen dabei gleichzeitig alle elektrisch leitenden Bauteile des Stators oder Ankers, nämlich die eisernen Blechpaketrahmen, die Bleche des Blechpakets, die Wicklungsdrähte und über Wärmeleitung auch das eingeträufelte Kunstharzes. Auch andere Bauteile oder Gegenstände (zum Beispiel Isolationsmaterial), die in Kontakt mit den elektrisch leitenden Bauteilen des Stators oder Ankers sind, werden dadurch mittelbar auf die angestrebte Träufeltemperatur oder Aushärtetemperatur gebracht.

Gemäß des erfindungsgemäßen Verfahrens ist es vorgesehen, dass während der genannten Verfahrenschritte a) bis d) der Induktor koaxial zur Längsachse des Stators oder Ankers zwischen wenigstens zwei axial voneinander beabstandeten Positionen hin und her bewegt wird. Diese beiden Positionen sind beispielsweise durch die beiden axialen Enden des Stators oder Ankers definiert. Die mittlere Geschwindigkeit, mit welcher der Induktor hin und her bewegt wird, beträgt beispielsweise 5 bis 50 Millimeter pro Sekunde, einschließlich der Bereichsgrenzen.

Durch die beschriebene Bewegung des Induktors zwischen den beiden axialen Endpositionen ist es möglich, den Induktor axial vorteilhaft kurz zu bauen. Zudem wird durch das Hin- und Zurückbewegen des Induktors vorteilhaft erreicht, dass immer nur zeitweise axiale Abschnitte des Stators oder Ankers von dem magnetischen Wechselfeld des Induktors überstrichen werden. Hierdurch können die gerade vom Induktor nicht überdeckten Bauteile des Stators oder Ankers einen Teil ihrer kurz zuvor erhaltenen thermischen Energie an benachbarte Bauteile abgeben.

Eine weitere Maßnahme zum schnellen und schadlosen Aufheizen des Stators oder Ankers besteht bevorzugt darin, dass der Induktor zum Erreichen und/oder Einhalten einer vorgegebenen Temperatur, also der Träufeltemperatur und der Aushärtetemperatur, wechselweise unter Einhaltung eines zeitlichen Abstands eingeschaltet und ausgeschaltet wird. Das Einschalten des Induktors erfolgt dann, wenn eine Soll-Temperatur des Stators oder Ankers noch nicht erreicht ist, während das Ausschalten des Induktors erfolgt, wenn die jeweilige Soll-Temperatur erreicht wurde. Die Soll-Temperatur kann durchaus etwas über der Träufeltemperatur oder über der Aushärtetemperatur liegen, da das danach erfolgende Ausschalten sowie die dann folgende kurze Wartephase zu einer Abkühlung führen. Außerdem kann die jeweilige Soll-Temperatur insbesondere während der Aufheizphasen einen Wert aufweisen, der abhängig von der abgelaufenen Zeit ist.

Die Messung der Außentemperatur des Stators erfolgt während der Verfahrenschritte a) bis d) vorzugsweise berührungslos, beispielsweise mit einem dazu geeigneten Temperatursensor. Diese berührungslose Temperaturmessung ist wegen des Drehens des Stators oder Ankers während des Träufelvorgangs und des Aushärtevorgangs von Vorteil, denn dadurch brauchen keine ortsfesten Temperatursensoren an dem Stator oder Anker befestigt und deren Signale aus dem drehenden System herausgeführt werden.

Der berührungslos arbeitende Temperatursensor ist vorzugsweise mit einem Steuerungsgerät verbunden, in dem die Temperaturmesswerte weiterverarbeitet werden. In Abhängigkeit von dem Erreichen oder Überschreiten beziehungsweise Unterschreiten von vorher festgelegten Soll-Temperaturen schaltet das Steuerungsgerät den Induktor ein oder aus. Nach dem Ausschalten des Induktors wird von dem Stator oder Anker Wärme sowohl nach außen abgestrahlt als auch nach innen abgegeben. Dabei erwärmt sich das Innere des Stators oder Ankers und damit auch alle dort angeordneten isolierenden Bauteile sowie das eingeträufelte Kunstharz-Härter-Gemisch. Der Vorgang des temperaturgesteuerten Einschaltens und Ausschaltendes des Induktors mit der dazwischen einzuhaltenden Wartephase wird so lange wiederholt, bis der komplette Stator oder Anker die angestrebte Träufeltemperatur oder Aushärtetemperatur erreicht hat. Der geschilderte Vorgang wird vorzugsweise dazu genutzt, um die einmal erreichte Träufeltemperatur oder Aushärtetemperatur, beziehungsweise einen Träufeltemperaturbereich oder Aushärtetemperaturbereich über einen bestimmten Zeitraum einzuhalten.

Gemäß einem weiteren Verfahrensmerkmal kann vorgesehen sein, dass das noch flüssige Kunstharz auf das axial äußere sowie höher angeordnete Ende der Wicklung des Stators oder Ankers aufgeträufelt wird. Der Neigungswinkel des Stators oder Ankers beträgt dabei beispielsweise 5° bis 20° zur Waagerechten, einschließlich der Bereichsgrenzen. Hierdurch kann das Kunstharz der Schwerkraft folgend leicht in das Innere des Stators oder Ankers eindringen.

Weiter ist bevorzugt vorgesehen, dass nach dem Ende des Träufelvorgangs und vor Beginn des Erwärmens des Stators oder Ankers auf den Aushärtetemperaturbereich der Stator oder Anker horizontal gestellt wird, um ein Auslaufen des Kunstharzes aus demselben zu verhindern.

Die Temperatur des Stators oder Ankers beträgt in einem bevorzugten Träufeltemperaturbereich 80°C bis 130°C, sowie in einem Aushärtetemperaturbereich 140°C bis 170°C, einschließlich der jeweiligen Bereichsgrenzen.

Während des Träufelvorgangs und während des Aushärtevorgangs wird der Stator oder Anker mit einer Drehzahl von zum Beispiel 5 bis 40 Umdrehungen pro Minute um seine Längsachse gedreht, um eine gleichmäßige Verteilung des Kunstharzes zu erreichen. Auch diese Drehzahlangaben verstehen sich einschließlich der Bereichsgrenzen.

Um ein gleichmäßiges Erwärmen sowie das Aufrechterhalten einer vorbestimmten Träufeltemperatur oder Aushärtetemperatur zu gewährleisten, kann vorgesehen sein, dass die Geschwindigkeitssteuerung des Aktuators derartig ist, dass über einen vorgegebenen Zeitraum hinweg die durchschnittliche Verweildauer eines elektromagnetisch aktiven Induktors in allen Bereichen des Stators oder Ankers in etwa gleich lang ist.

Erfindungsgemäß ist es vorgesehen, dass der Induktor bei seiner Annäherung an ein axiales Ende des Stators oder Ankers in Betrieb ist, dass der Induktor beim Erreichen dieses Endes aber abgeschaltet wird, und dass der Induktor erst dann wieder in Betrieb genommen wird, wenn er diesen Endbereich des Stators oder Ankers um eine vorbestimmte Strecke wieder verlassen hat.

Zum besseren Verständnis der Erfindung ist eine Zeichnung beigefügt, in der ein Ausführungsbeispiel dargestellt ist. In der Zeichnung zeigt
Fig. 1 einen schematischen Längsschnitt durch einen Stator, der in einer Imprägniervorrichtung mit dem erfindungsgemäßen Verfahren behandelt wird,
Fig. 2 ein Diagram, in dem der Temperaturverlauf eines verfahrensgemäß behandelten Stators über der Zeit aufgetragen ist,
Fig. 3 ein schematisches Schaltdiagramm, in dem Einschaltzustände und Ausschaltzustände des in Fig. 1 dargestellten Induktors eingetragen sind, und
Fig. 4 einen schematischen Querschnitt durch einen Stator, in dessen zylindrischen Hohlraum ein Induktor koaxial angeordnet ist.

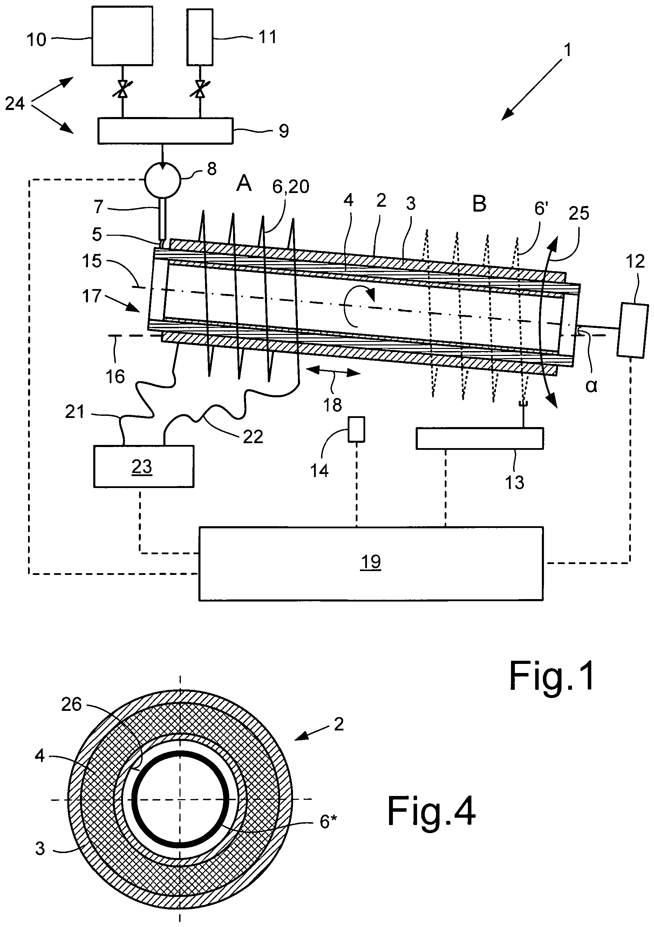

Demnach zeigt Fig. 1 insgesamt eine Imprägniervorrichtung 1 für einen in einem schematischen Längsschnitt dargestellten hohlzylindrischen Stator 2. Ein in der Imprägniervorrichtung 1 behandelter Stator 2 ist nach seiner endgültigen Fertigstellung zum Einbau in eine Elektromaschine bestimmt. Der Stator 2 weist beispielhaft einen konventionellen Aufbau mit ringförmig angeordneten Statorsegmenten auf, wobei jedes dieser Statorsegmente einen Rahmen 3 aufweist, an dem hintereinander angeordnete Bleche befestigt sind. Zwischen jeweils benachbarten Statorsegmenten sind aus Drähten oder mittels der bekannten hairpin-Technologie aufgebaute Statorwicklungen 4 angeordnet, deren Leitungsenden zu einem axial endseitigen Wicklungskopf 17 herausgeführt sind. Außerdem ist in dem Stator 2 nicht dargestelltes Isolationsmaterial angeordnet, mittels dem elektrisch voneinander zu trennende Bauteile beabstandet sind.

Der Stator 2 ist in der nicht im Detail dargestellten Imprägniervorrichtung 1 hinsichtlich seiner Längsachse 15 unter einem Neigungswinkel α zur Horizontalen 16 schräg gestellt aufgenommen, wobei in dem gezeigten Ausführungsbeispiel der Neigungswinkel 5° bis 20° beträgt. Wie eingangs erwähnt wurde, kann der Neigungswinkel aber auch 0° betragen. Zur Einstellung des Neigungswinkels α kann der Stator 2 mittels einer nicht dargestellten Schwenkvorrichtung gekippt werden. Eine diesbezügliche Schwenkbewegung 25 ist in Fig. 1 durch einen Doppelpfeil angedeutet.

Der Stator 2 ist in dem in Fig. 1 gezeigten Ausführungsbeispiel in der Imprägniervorrichtung 1 außerdem drehbar gelagert angeordnet sowie von einem elektrischen Antriebsmotor 12 um seine Längsachse 15 antreibbar. Der Antriebsmotor 12 ist über eine nicht bezeichnete, jedoch gestrichelt gezeichnete Steuerungsleitung mit einem Steuerungsgerät 19 der Vorrichtung verbunden.

Der Stator 2 ist über einen vergleichsweise kurzen Abschnitt koaxial von einem Induktor 6 ringförmig umgeben, der weitestgehend als elektrische Spule ausgebildet ist. Der Induktor 6 besteht aus einem wendelförmig gebogenen Rohr 20, durch das ein Kühlmittel führbar ist. Deutlich erkennbar ist die axiale Länge des Induktors 6 kürzer als die axiale Länge des Stators 2. Der Induktor 6 ist über flexible Leitungen 21, 22 mit einer als Frequenzumrichter arbeitenden Spannungsquelle 23 verbunden, die eine Wechselspannung der gewünschten Frequenz erzeugen kann. Im Betrieb des Induktors 6 strömt ein Wechselstrom durch das Material des wendelförmigen Rohres 20 und erzeugt dabei ein magnetisches Wechselfeld, welches in allen elektrisch leitenden Bauteilen des Stators 2 Wirbelströme erzeugt, welche diese Bauteile zeitgleich aufheizen. Durch Wärmestrahlung oder Wärmeleitung werden auch benachbarte, elektrisch isolierende Werkstoffe des Stators 2 mit aufgeheizt.

Der Induktor 6 ist mittels eines Aktuators 13 koaxial zum Stator 2 verschiebbar angeordnet. Dieser Aktuator 13 ist über eine gestrichelt gezeichnete Steuerungsleitung mit dem Steuerungsgerät 19 verbunden. Mittels des Aktuators 13 kann der Induktor 6 zwischen einer ersten axialen Endposition A und einer zweiten axialen Endposition hin und her bewegt werden. Diese Bewegungsrichtungen 18 des Induktors 6 sind durch einen Doppelpfeil veranschaulicht. In Fig. 1 ist der Induktor 6' in der zweiten Endposition B mit gepunkteter Linie dargestellt.

Außerdem ist ein Temperatursensor 14 vorhanden, mit dem die Oberflächentemperatur des Stators 2 messbar ist. Die Temperaturmessung erfolgt dabei berührungslos, und der Temperatursensor 14 ist über eine gestrichelt gezeichnet Sensorleitung mit dem Steuerungsgerät 19 verbunden.

Wie Fig. 1 weiter zeigt, gehört zu der Imprägniervorrichtung 1 auch eine hier beispielhaft dargestellte Träufelvorrichtung 24, zu der ein erster Behälter 10 für einen bei Raumtemperatur flüssigen Kunstharz 5 und ein zweiter Behälter 11 für einen flüssigen Härter gehört. Über nicht weiter bezeichnete Ventile wird Kunstharz und Härter in einem vorbestimmten Mengenverhältnis in einen Mischbehälter 9 geführt. Von dem Mischbehälter 9 wird das Kunstharz 5 mittels einer Pumpe 8 zu wenigstens einer Träufeldüse 7 geleitet, mit der das Kunstharz 5 auf den Wicklungskopf 17 des Stators 2 mit einem vergleichsweise geringem Volumenstrom träufelbar ist. Der Volumenstrom ist dabei so groß, dass gerade soviel von dem Kunstharz 5 auf den Wicklungskopf 17 gelangt, wie von dem Stator 2 zum Auffüllen seiner Hohlräume aufgenommen werden kann. Wie schon erwähnt kann auch ein einkomponentiges Kunstharz verwendet werden, welches sich ebenfalls bei Temperaturerhöhung zu einen Duroplast verfestigt. In diesem Fall kann auf den zweiten Behälter 11, das zweite Ventil und den Mischbehälter 9 verzichtet werden.

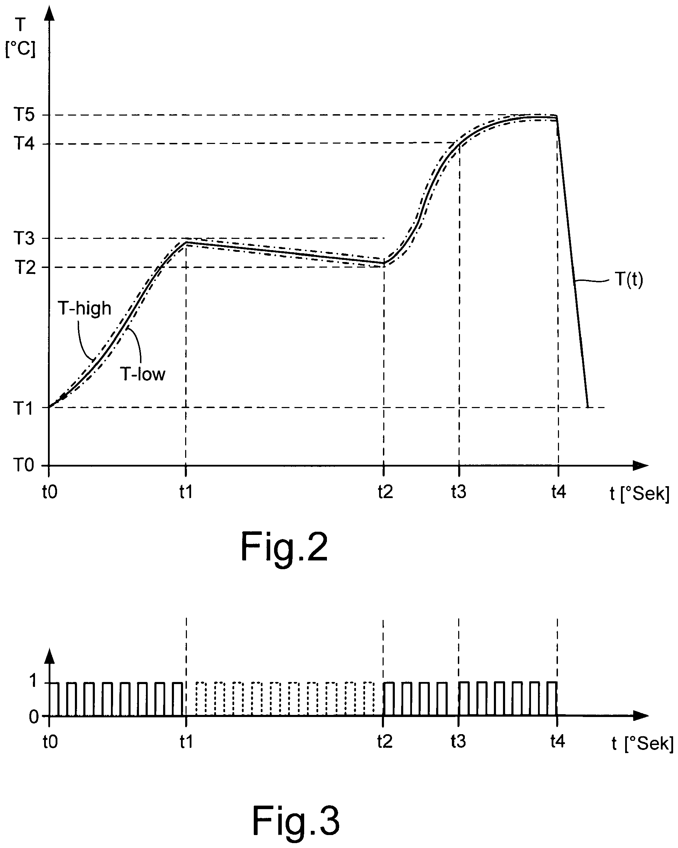

Die Fig. 2 veranschaulicht den Verlauf T(t) der Temperatur T des Stators 2 über die Zeit t während einer Träufelimprägnierung desselben mit der Imprägniervorrichtung 1 gemäß Fig. 1. Beginnend im Zeitpunkt t0 ist die Temperatur T1 des Stators 2 identisch mit der umgebenden Raumtemperatur. Zunächst wird der Antriebsmotor 12 und der Aktuator 13 von dem Steuerungsgerät 19 eingeschaltet. Hierdurch dreht sich bei dem dargestellten Ausführungsbeispiel der Stator 2 um seine Längsachse 15, und der Aktuator 13, der beispielsweise als eine pneumatische Kolben-Zylinder-Anordnung oder als elektrischer Stellantrieb ausgebildet sein kann, schiebt den Induktor 6 zwischen den beiden axialen Endpositionen A und B hin und her. Durch Einschalten der Spannungsquelle 23 mittels des Steuerungsgeräts 19 wird der Induktor 6 hinsichtlich seiner elektromagnetischen Funktion in Betrieb gesetzt, so dass ein elektrischer Wechselstrom mit vorbestimmter Frequenz durch die flexiblen Stromleitungen 21, 22 und das wendelförmige Rohr 20 des Induktors 6 fließt. Hierdurch wird von dem Induktor 6 ein magnetisches Wechselfeld erzeugt, welches in allen elektrisch leitenden Bauteilen des Stators 2 Wirbelströme induziert, die zu einer Erwärmung derselben sowie mittelbar auch benachbarter, nicht elektrisch leitender Bauteile des Stators 2 führt.

Zum induktiven Erwärmen des Stators 2 oder Ankers ist es nicht zwingend erforderlich, dass sich dieser während des Betriebs des Induktors 6 um seine Längsachse 15 dreht. Bei einem ungleichmäßigen Aufbau des Induktors 6 abweichend von einer homogenen Spule ist diese Rotation jedoch von Vorteil. Außerdem wird durch die Rotation des Stators 2 oder Ankers dafür gesorgt, dass sich das noch nicht gelierte beziehungsweise noch nicht verfestigte Kunstharz 5 der Schwerkraft folgend im unteren Bereich des Stators 2 oder Ankers ansammelt und infolgedessen ungewollt axial aus demselben austritt.

Da der Induktor 6 im Vergleich zu dem Stator 2 eine vergleichsweise geringe axiale Länge aufweist und von dem Aktuator 13 ständig zwischen der beiden axialen Endpositionen A, B hin und her bewegt wird, kann eine weitgehend gleichmäßige Erwärmung aller Bestandteile des Stators 2 erreicht werden. Wenn der Induktor 6 nach einer Wärmebehandlung des ersten axialen Endabschnitts des Stators 2 diesen Ort in Richtung zum zweiten axialen Endabschnitt verlassen hat, kann die am ersten Endabschnitt des Stators 2 vorhandene Wärme im Inneren desselben an alle dortigen Bauteile weitergegeben werden, so dass auch elektrisch nicht leitende Bauteile des Stators 2 vergleichsweise gleichmäßig zusammen mit den elektrisch leitenden Bauteilen aufgeheizt werden. Hierdurch wird auch eine zu schnelle und zu starke Aufheizung zum Beispiel der metallischen Bauteile des Stators 2 vermieden, in deren Folge ansonsten nichtmetallische Bauteile des Stators 2, wie beispielsweise Materialien zur elektrischen Isolation, geschädigt werden würden. Gleiches geschieht auch an dem zweiten axialen Endabschnitt des Stators 2 sowie in dem axial dazwischen angeordneten Bereich desselben.

Um die Verweildauer eines elektromagnetisch aktiven Induktors 6 im Bereich der axialen Enden des Stators 2 aufgrund seines Abbremsens und erneuten Beschleunigens in die entgegengesetzte Bewegungsrichtung nicht unvorteilhaft lang werden zu lassen, kann vorgesehen sein, dass durch eine daran angepasste Geschwindigkeitssteuerung des Aktuators 13 die Verweildauer des Induktors 6 in allen Bereichen des Stators 2 in etwa gleich ist.

Erfindungsgemäß, um eine axial möglichst gleichmäßige Erwärmung des Stators 2 zu erreichen, ist der Induktor 6 im Bereich der beiden axialen Enden des Stators 2 nicht ständig im Betrieb. So ist vorgesehen, dass der Induktor 6 bei seiner Annäherung an ein axiales Ende des Stators 2 noch in Betrieb ist, bei dessen Erreichen aber abgeschaltet wird, und dass der Induktor 6 dann wieder in Betrieb genommen wird, wenn er diesen Endbereich des Stators 2 um eine vorbestimmte Strecke verlassen hat.

Wie Fig. 2 zeigt, wird der Induktor 6 so betrieben, dass ausgehend von der Anfangstemperatur T1 der Stator 2 induktiv erwärmt wird. Die geschieht, wie Fig. 3 veranschaulicht, beispielsweise auch mittels eines wechselweisen Einschalten und Ausschalten des Induktors 6, wobei in Fig. 3 der eingeschaltete Zustand des Induktors 6 durch die Ziffer 1 und der ausgeschaltete Zustand durch die Ziffer 0 gekennzeichnet ist. Das Einschalten und Ausschalten des Induktors 6 erfolgt vorzugsweise geregelt, und zwar in Abhängigkeit von der mittels des Temperatursensors 14 gemessenen Außentemperatur des Stators 2. Wenn das Steuerungsgerät 19 feststellt, dass die Außentemperatur T des Stators 2 einen vorgegebenen oberen Soll-Temperaturwert
T-high überschritten hat, wird der Induktor 6 kurzzeitig ausgeschaltet. Wenn dann ein unterer Soll-Temperaturwert T-low unterschritten ist, wird der Induktor 6 wieder eingeschaltet. Diese Soll-Temperaturwerte können abhängig von der bereits abgelaufenen Zeit t definiert sein. Fig. 2 zeigt hierzu, dass sich die Außentemperatur T des Stators 2 aufgrund der beschrieben Regelung immer in einem Temperaturbereich befindet, der durch die Kurven für den unteren Soll-Temperaturwert T-low und den oberen Soll-Temperaturwert T-high begrenzt ist.

Nach Abschluss der ersten Aufheizphase im ersten Zeitraum t0 - t1 hat die Außentemperatur T des Stators und damit auch dessen Innentemperatur einen Temperaturwert errechet, welcher in einem sogenannten Träufeltemperaturbereich T2 - T3 liegt. Die Regelung der Imprägniervorrichtung 1 sorgt während der nun folgenden Träufelphase in einem zweiten Zeitraum t1- t2 dafür, dass die Temperatur T des Stators 2 innerhalb dieses Träufeltemperaturbereiches T2 - T3 bleibt. Dies geschieht durch ein dafür notwendiges Ein- und Ausschalten sowie der geschilderten Hin- und Herbewegung des Induktors 6 koaxial zu dem Stator 2. Während dieser Träufelphase wird mittels der durch das Steuerungsgerät 19 gesteuerten Pumpe 8 das noch flüssige Kunstharz 5 dem Wickelkopf 17 und damit dem Inneren des Stators 2 zugeführt.

Durch die schon erwähnte Schrägstellung des Stators 2 und dessen ständiges Drehen um seine Längsachse 15 verteilt sich das Kunstharz 5 in dem Stator 2 gleichmäßig und füllt so alle bis dahin luftgefüllten Zwischenräume aus. Am Ende der Träufelphase, also dann, wenn eine vorher bestimmte Menge des Kunstharzes 5 in den Stator 2 oder Anker hinein geträufelt wurde, wird der Stator 2 oder Anker horizontal gestellt, um während der nun folgenden Aufheizphase auf die Aushärtetemperatur (T2 - T3) ein Auslaufen des Kunstharzes 5 aus dem Stator 2 zu vermeiden.

Erkennbar ist in Fig. 3 anhand der gestrichelt gezeichneten Einschaltimpulse auch, dass während des zweiten Zeitraumes t2 - t3, also während des Träufelvorgangs, der Induktor 6 ausgeschaltet sein kann, sofern der untere Temperaturgrenzwert T2 des Träufeltemperaturbereiches T2 - T3 nicht unterschritten wird. Dies kann beispielsweise bei kleinen Statoren oder Anker und vergleichsweise kurzen Träufelzeiträumen zur weiteren Energieeinsparung vorteilhaft sein.

Nach dem Ende der Träufelphase beginnt ein dritter Zeitraum t2 - t3, in dem der Stator 2 mittels des Induktors 6 induktiv auf eine Aushärtetemperatur erwärmt wird, welche in einem zuvor festgelegten Aushärtetemperaturbereich T4 - T5 liegt. Während der Temperaturerhöhung auf die Aushärtetemperatur und während des anschließenden Aushärtens wird durch ständiges Hin- und Herbewegen des Induktors 6 sowie einem temperaturgeregelten Ein- und Ausschalten desselben eine weitgehend identische und konstante Innen- und Außentemperatur des Stators 2 erreicht.

Nach dem Ende des Aushärtens des Duroplasts im Stator 2 zum Zeitpunkt t4 wird der Induktor 6 sowie der Aktuator 13 ausgeschaltet und der Stator 2 aus der Imprägniervorrichtung 1 entnommen sowie zum Abkühlen auf Raumtemperatur T1 zwischengelagert.

Das vorgestellte Verfahren zur Träufelimprägnierung eines Stators 2 oder Ankers einer Elektromaschine zeichnet sich durch dessen einfache Regelbarkeit sowie schnelle und homogene Erwärmung des Stators 2 oder Ankers aus. Es ermöglicht im Vergleich zu bekannten Verfahren eine weitgehend zeitgleiche Erwärmung aller Bauteile des Stators 2 oder Ankers, ohne dass die Gefahr besteht, dass beispielsweise thermisch weniger stabile Bauteile, wie etwa Isolationsmaterialien, durch eine Überhitzung verbrennen oder zumindest in deren gewollten Eigenschaften beeinträchtigt werden. Außerdem erfolgt die induktive Erwärmung des Stators 2 oder Ankers wegen ihres thermisch höheren Wirkungsgrades sehr viel energiesparender als bei einer Erwärmung derselben in einem Heizofen oder mittels eines elektrischen Heizstromes, der durch die Wicklung des Stators oder Ankers geleitet wird, denn im letzteren Fall dienen nur die Wicklungsleitungen zum Aufheizen des Stators oder Ankers, während bei einer induktiven Erwärmung derselben alle elektrisch leitenden Bauteile gleichzeitig erhitzt werden. Schließlich braucht bei Nutzung des erfindungsgemäßen Verfahrens keiner der Wicklungsdrähte an eine elektrische Spannungsquelle angeschlossen und mit einem Heizstrom versorgt werden, so dass der Montagevorgang in der Imprägniervorrichtung 1 im Vergleich zu dem Heizstromverfahren deutlich reduziert ist. Insgesamt bewirken die genannten Vorteile eine deutliche Verringerung der Produktionszeit und damit der Herstellkosten.

Fig. 4 zeigt, dass das erfindungsgemäße Verfahren zur Träufelimprägnierung auch anwendbar ist, um einen Stator 2 von radial innen zu erwärmen. Hierzu ist ein beispielsweise wendelförmig ausgebildeter Induktor 6* koaxial in einem zylindrischen Hohlraum 26 des Stators 2 angeordnet. Bei Bedarf kann auch dieser Induktor 6* axial hin und her bewegt werden, und wie beschrieben hinsichtlich seiner Aktivierung gesteuert werden. Die Erwärmung aller Bauteile des Stators 2 erfolgt dann wie bereits erläutert.

## Patentansprüche

1. Verfahren zur Träufelimprägnierung eines Stators (2) oder Ankers einer Elektromaschine mit einem unter Temperaturerhöhung aushärtenden Kunstharz (5), welches folgende Schritte aufweist:
a) Erwärmen des Stators (2) oder Ankers von einer Ausgangstemperatur (T1) auf einen Träufeltemperaturbereich (T2 - T3) des zunächst noch flüssigen Kunstharzes (5) in einem ersten Zeitraum (t0 - t1),
b) Konstanthalten der Temperatur im Träufeltemperaturbereich (T2 - T3) sowie Einbringen des noch flüssigen Kunstharzes (5) in den Stator (2) oder Anker in einem zweiten Zeitraum (t1- t2),
c) Erwärmen des Stators (2) oder Ankers auf einen Aushärtetemperaturbereich (T4 - T5) in einem dritten Zeitraum (t2 - t3),
d) Konstanthalten der Temperatur des Stators (2) oder Ankers im Aushärtetemperaturbereich (T4, T5) in einem vierten Zeitraum (t3 - t4) sowie Abbinden und Aushärten des Kunstharzes (5) zu einem Duroplast, und
e) Abkühlen des Stators (2) oder Ankers nach dem Ende des vierten Zeitraumes (t3 - t4),
wobei der Stator (2) oder Anker während des Einbringens des flüssigen Kunstharzes (5) in einer Imprägniervorrichtung (1) angeordnet ist,
und bei dem der Träufeltemperaturbereich (T2 - T3) geringere Temperaturen aufweist als der Aushärtetemperaturbereich (T4 - T5),
wobei
die Erwärmung des Stators (2) oder Ankers induktiv mittels eines Induktors (6, 6*) erfolgt,
wobei während der Verfahrenschritte a) bis d) der Induktor (6, 6*) koaxial zur Längsachse (16) des Stators (2) oder Ankers zwischen wenigstens zwei axial voneinander beabstandeten Positionen (A, B) hin und her bewegt (18) wird,
**dadurch gekennzeichnet,**
**dass** der Induktor (6, 6*) bei seiner Annäherung an ein axiales Ende des Stators (2) oder Ankers in Betrieb ist, dass der Induktor (6, 6*) beim Erreichen dieses axialen Endes abgeschaltet wird, und dass der Induktor (6, 6*) erst dann wieder in Betrieb genommen wird, wenn er diesen Endbereich des Stators (2) oder Ankers um eine vorbestimmte Strecke wieder verlassen hat.

2. Verfahren nach Anspruch 1, **dadurch gekennzeichnet, dass** die Erwärmung aller elektrisch leitenden Bauteile des Stators (2) oder Ankers mittels elektrischer Wirbelströme erfolgt, welche durch ein hochfrequentes magnetisches Wechselfeld eines elektromagnetischen Induktors (6) erzeugt werden, der den Stator (2) oder Anker radial außen ringförmig oder hohlzylindrisch umgreift.

3. Verfahren nach Anspruch 1, **dadurch gekennzeichnet, dass** die Erwärmung aller elektrisch leitenden Bauteile des Stators (2) mittels elektrischer Wirbelströme erfolgt, welche durch ein hochfrequentes oder mittelfrequentes magnetisches Wechselfeld eines elektromagnetischen Induktors (6*) erzeugt werden, der in einem zentrischen, koaxialen Hohlraum (26) des Stators (2) angeordnet ist.

4. Verfahren nach einem der Ansprüche 1 bis 3, **dadurch gekennzeichnet, dass** der Stator (2) oder Anker während des Einbringens des flüssigen Kunstharzes (5) in der Imprägniervorrichtung (1) hinsichtlich seiner Längsachse (15) zur Horizontalen (16) geneigt angeordnet ist und/oder um diese Längsachse (15) gedreht wird.

5. Verfahren nach einem der Ansprüche 1 bis 4, **dadurch gekennzeichnet, dass** die Geschwindigkeit des Induktors (6, 6*) fünf bis fünfzig Millimeter pro Sekunde beträgt, einschließlich der Bereichsgrenzen.

6. Verfahren nach einem der Ansprüche 1 bis 5, **dadurch gekennzeichnet, dass** während der Verfahrenschritte a) bis d) die Außentemperatur des Stators (2) oder Ankers berührungslos gemessen wird.

7. Verfahren nach Anspruch 6, **dadurch gekennzeichnet, dass** der Induktor (6, 6*) zum Erreichen und/oder Einhalten einer vorgegebenen Temperatur (T2, T3, T4, T5) des Stators (2) oder Ankers wechselweise unter Einhaltung eines zeitlichen Abstands eingeschaltet und ausgeschaltet wird.

8. Verfahren nach Anspruch 6 oder 7, **dadurch gekennzeichnet, dass** der Induktor (6, 6*) in Abhängigkeit von der gemessenen Außentemperatur des Stators (2) oder Ankers eingeschaltet oder ausgeschaltet wird.

9. Verfahren nach einem der Ansprüche 1 bis 8, **dadurch gekennzeichnet, dass** das noch flüssige Kunstharz (5) auf das axial äußere sowie höher angeordnete Ende der Wicklung (4) des Stators (2) oder Ankers aufgeträufelt wird.

10. Verfahren nach Anspruch 9, **dadurch gekennzeichnet, dass** der Neigungswinkel (α) des Stators (2) oder Ankers 5° bis 20° zur Waagerechten beträgt, einschließlich der Bereichsgrenzen.

11. Verfahren nach einem der Ansprüche 1 bis 10, **dadurch gekennzeichnet, dass** nach dem Ende des Träufelvorgangs und vor Beginn des Erwärmens des Stators (2) oder Ankers auf den Aushärtetemperaturbereich der Stator (2) oder Anker horizontal gestellt wird, um ein Auslaufen des Kunstharzes (5) aus demselben zu vermeiden.

12. Verfahren nach einem der Ansprüche 1 bis 11, **dadurch gekennzeichnet, dass** die Temperatur des Stators (2) oder Ankers im Träufeltemperaturbereich (T2 - T3) 80°C bis 130°C und im Aushärtetemperaturbereich (T4 - T5) 140°C bis 170°C beträgt, einschließlich der jeweiligen Bereichsgrenzen.

13. Verfahren nach einem der Ansprüche 4 bis 12, **dadurch gekennzeichnet, dass** der Stator (2) oder Anker mit einer Drehzahl gedreht wird, die fünf bis vierzig Umdrehungen pro Minute beträgt, einschließlich der Bereichsgrenzen.

14. Verfahren nach einem der Ansprüche 1 bis 13, **dadurch gekennzeichnet, dass** der Induktor (6, 6*) mittels eines Aktuators (13) hin und her bewegt werden kann, wobei die Geschwindigkeitssteuerung des Aktuators (13) derartig ist, dass über einen vorgegebenen Zeitraum hinweg die durchschnittliche Verweildauer des elektromagnetisch aktiven Induktors (6, 6*) in allen Bereichen des Stators (2) oder Ankers in etwa gleich lang ist.

## Claims

1. Method for trickle impregnation of a stator (2) or armature of an electric machine with a synthetic resin (5) which cures under a temperature increase, comprising the following steps:
a) heating the stator (2) or armature from an initial temperature (T1) to a trickle temperature range (T2-T3) of the synthetic resin (5), which is initially still liquid, in a first time period (tO-tl),
b) keeping the temperature constant in the trickle temperature range (T2-T3) and introducing the still liquid synthetic resin (5) into the stator (2) or armature in a second time period (t1-t2),
c) heating the stator (2) or armature to a curing temperature range (T4-T5) in a third time period (t2-t3),
d) keeping the temperature of the stator (2) or armature constant in the curing temperature range (T4, T5) in a fourth time period (t3-t4) and setting and curing the synthetic resin (5) to form a thermoset, and
e) cooling the stator (2) or armature after the end of the fourth time period (t3-t4),
the stator (2) or armature being arranged in an impregnation device (1) during the introduction of the liquid synthetic resin (5),
and the trickle temperature range (T2-T3) comprising lower temperatures than the curing temperature range (T4-T5),
the stator (2) or armature being inductively heated by means of an inductor (6, 6^{∗}),
the inductor (6, 6^{∗}) being moved back and forth (18) between at least two axially spaced positions (A, B), coaxially to the longitudinal axis (16) of the stator (2) or armature, during method steps a) to d),
**characterized in that** the inductor (6, 6^{∗}) is in operation when it approaches an axial end of the stator (2) or armature, **in that** the inductor (6, 6^{∗}) is switched off when this axial end is reached, and **in that** the inductor (6, 6^{∗}) is only put back into operation when it has again left this end region of the stator (2) or armature by a predetermined distance.

2. Method according to claim 1, **characterized in that** all electrically conductive components of the stator (2) or armature are heated by means of electrical eddy currents which are generated by a high-frequency alternating magnetic field of an electromagnetic inductor (6) which surrounds the stator (2) or armature radially on the outside in an annular or a hollow-cylindrical manner.

3. Method according to claim 1, **characterized in that** all electrically conductive components of the stator (2) are heated by means of electrical eddy currents which are generated by a high-frequency or medium-frequency alternating magnetic field of an electromagnetic inductor (6^{∗}) which is arranged in a central, coaxial cavity (26) of the stator (2).

4. Method according to any of claims 1 to 3, **characterized in that** the stator (2) or armature is arranged in the impregnation device (1) so as to be inclined to the horizontal (16) with respect to its longitudinal axis (15) and/or is rotated about said longitudinal axis (15) during the introduction of the liquid synthetic resin (5).

5. Method according to any of claims 1 to 4, **characterized in that** the speed of the inductor (6, 6^{∗}) is five to fifty millimeters per second, including the range limits.

6. Method according to any of claims 1 to 5, **characterized in that** the outside temperature of the stator (2) or armature is measured contactlessly during method steps a) to d).

7. Method according to claim 6, **characterized in that** the inductor (6, 6^{∗}) is alternatingly switched on and off in accordance with a time interval in order to achieve and/or maintain a predetermined temperature (T2, T3, T4, T5) of the stator (2) or armature.

8. Method according to claim 6 or claim 7, **characterized in that** the inductor (6, 6^{∗}) is switched on or off depending on the measured outside temperature of the stator (2) or armature.

9. Method according to any of claims 1 to 8, **characterized in that** the still liquid synthetic resin (5) is trickled onto the axially outer and higher end of the winding (4) of the stator (2) or armature.

10. Method according to claim 9, **characterized in that** the angle of inclination (α) of the stator (2) or armature is 5° to 20° with respect to the horizontal, including the range limits.

11. Method according to any of claims 1 to 10, **characterized in that**, after the end of the trickle process and before the start of the heating of the stator (2) or armature to the curing temperature range, the stator (2) or armature is positioned horizontally in order to prevent the synthetic resin (5) from leaking from same.

12. Method according to any of claims 1 to 11, **characterized in that** the temperature of the stator (2) or armature is 80°C to 130°C in the trickle temperature range (T2-T3) and is 140°C to 170°C in the curing temperature range (T4-T5), including the respective range limits.

13. Method according to any of claims 4 to 12, **characterized in that** the stator (2) or armature is rotated at a speed which is five to forty revolutions per minute, including the range limits.

14. Method according to any of claims 1 to 13, **characterized in that** the inductor (6, 6^{∗}) can be moved back and forth by means of an actuator (13), the speed control of the actuator (13) being such that over a predetermined time period, the average residence time of the electromagnetically active inductor (6, 6^{∗}) is approximately the same in all regions of the stator (2) or armature.

## Revendications

1. Procédé d'imprégnation goutte à goutte d'un stator (2) ou induit d'une machine électrique avec une résine synthétique (5) durcissant sous l'effet d'une augmentation de température, lequel présente les étapes suivantes consistant à :
a) chauffer le stator (2) ou l'induit d'une température de départ (T1) à une plage de températures de goutte à goutte (T2 - T3) de la résine synthétique (5) d'abord encore liquide pendant une première période (t0 - t1),
b) maintenir la température constante dans la plage de températures de goutte à goutte (T2 - T3) ainsi qu'introduire la résine synthétique (5) encore liquide dans le stator (2) ou l'induit pendant une deuxième période (t1 - t2),
c) chauffer le stator (2) ou l'induit à une plage de températures de durcissement (T4 - T5) pendant une troisième période (t2 - t3),
d) maintenir la température du stator (2) ou de l'induit constante dans la plage de températures de durcissement (T4, T5) pendant une quatrième période (t3 - t4) ainsi que faire prendre et durcir la résine synthétique (5) pour obtenir une résine thermodurcissable, et
e) refroidir le stator (2) ou l'induit après la fin de la quatrième période (t3 - t4),
dans lequel le stator (2) ou l'induit est disposé pendant l'introduction de la résine synthétique (5) liquide dans un dispositif d'imprégnation (1),
et selon lequel la plage de températures de goutte à goutte (T2 - T3) présente des températures plus basses que la plage de températures de durcissement (T4 - T5),
dans lequel
le chauffage du stator (2) ou de l'induit s'effectue par induction au moyen d'une bobine d'induction (6, 6*),
dans lequel pendant les étapes de procédé a) à d), la bobine d'induction (6, 6*) est déplacée en va-et-vient de manière coaxiale par rapport à l'axe longitudinal (16) du stator (2) ou de l'induit entre au moins deux positions (A, B) espacées axialement l'une de l'autre,
**caractérisé en ce**
**que** la bobine d'induction (6, 6*), lorsqu'elle se rapproche d'une extrémité axiale du stator (2) ou de l'induit, est en fonctionnement,
**que** la bobine d'induction (6, 6*), lorsque cette extrémité axiale est atteinte, est mise hors service, et que la bobine d'induction (6, 6*) n'est remise en service que lorsque celle-ci a à nouveau quitté cette zone d'extrémité du stator (2) ou de l'induit d'un trajet prédéfini.

2. Procédé selon la revendication 1, **caractérisé en ce que** le chauffage de tous les composants électro-conducteurs du stator (2) ou de l'induit s'effectue au moyen de courants de Foucault électriques, lesquels sont produits par un champ alternatif magnétique à haute fréquence d'une bobine d'induction (6) électromagnétique, qui entoure le stator (2) ou l'induit radialement à l'extérieur de manière annulaire ou cylindrique creuse.

3. Procédé selon la revendication 1, **caractérisé en ce que** le chauffage de tous les composants électro-conducteurs du stator (2) s'effectue au moyen de courants de Foucault électriques, lesquels sont produits par un champ alternatif magnétique haute fréquence ou moyenne fréquence d'une bobine d'induction (6*) électromagnétique, qui est disposée dans une cavité coaxiale centrale (26) du stator (2).

4. Procédé selon l'une quelconque des revendications 1 à 3, **caractérisé en ce que** le stator (2) ou l'induit, pendant l'introduction de la résine synthétique (5) liquide dans le dispositif d'imprégnation (1), est disposé de manière inclinée par rapport à l'horizontale (16) en ce qui concerne son axe longitudinal (15) et/ou est amené en rotation autour de cet axe longitudinal (15).

5. Procédé selon l'une quelconque des revendications 1 à 4, **caractérisé en ce que** la vitesse de la bobine d'induction (6, 6*) atteint cinq à cinquante millimètres par seconde, y compris les limites de plage.

6. Procédé selon l'une quelconque des revendications 1 à 5, **caractérisé en ce que**, pendant les étapes de procédé a) à d), la température extérieure du stator (2) ou de l'induit est mesurée sans contact.

7. Procédé selon la revendication 6, **caractérisé en ce que** la bobine d'induction (6, 6*), pour atteindre et/ou maintenir une température (T2, T3, T4, T5) prédéfinie du stator (2) ou de l'induit, est mise en service et mise hors service alternativement tout en conservant un intervalle de temps.

8. Procédé selon la revendication 6 ou 7, **caractérisé en ce que** la bobine d'induction (6, 6*) est mise en service ou mise hors service en fonction de la température extérieure mesurée du stator (2) ou de l'induit.

9. Procédé selon l'une quelconque des revendications 1 à 8, **caractérisé en ce que** la résine synthétique (5) encore liquide est amenée en goutte à goutte sur l'extrémité axialement extérieure ainsi que disposée plus haut de l'enroulement (4) du stator (2) ou de l'induit.

10. Procédé selon la revendication 9, **caractérisé en ce que** l'angle d'inclinaison (α) du stator (2) ou de l'induit atteint 5° à 20° par rapport à l'horizontale, y compris les limites de plage.

11. Procédé selon l'une quelconque des revendications 1 à 10, **caractérisé en ce que**, après la fin de la procédure de goutte à goutte et avant le début du chauffage du stator (2) ou de l'induit à la plage de températures de durcissement, le stator (2) ou l'induit est posé horizontalement, afin d'éviter que la résine synthétique (5) ne s'écoule de celui-ci.

12. Procédé selon l'une quelconque des revendications 1 à 11, **caractérisé en ce que** la température du stator (2) ou de l'induit atteint 80 °C à 130 °C dans la plage de températures de goutte à goutte (T2 - T3) et 140 °C à 170 °C dans la plage de températures de durcissement (T4 - T5), y compris les limites de plage respectives.

13. Procédé selon l'une quelconque des revendications 4 à 12, **caractérisé en ce que** le stator (2) ou l'induit est mis en rotation à une vitesse de rotation qui atteint cinq à quarante rotations par minute, y compris les limites de plage.

14. Procédé selon l'une quelconque des revendications 1 à 13, **caractérisé en ce que** la bobine d'induction (6, 6*) peut être déplacée en va-et-vient au moyen d'un actionneur (13), dans lequel la commande de vitesse de l'actionneur (13) est telle que la durée de séjour moyenne de la bobine d'induction (6, 6*) active électromagnétiquement est à peu près de même longueur dans toutes les zones du stator (2) ou de l'induit pendant une période prédéfinie.
